# FASCICULE DE BREVET EUROPEEN

(11) **EP 2 800 615 B1**
(45) Date de publication et mention de la délivrance du brevet: **14.04.2021**
(21) Numéro de dépôt: 12815739.3
(22) Date de dépôt: 13.12.2012
(51) Int. Cl.: B01D 3/00, B01D 3/32

(54) **INSTALLATION DE SÉPARATION PAR DISTILLATION À BASSE TEMPÉRATURE ET PROCÉDÉ DE SÉPARATION DANS UNE TELLE INSTALLATION**
TRENNVORRICHTUNG FÜR NIEDERTEMPERATUR-DESTILLATION UND TRENNVERFAHREN MIT EINER SOLCHEN VORRICHTUNG
LOW-TEMPERATURE DISTILLATION SEPARATING APPARATUS AND SEPARATING METHOD USING SUCH AN APPARATUS

(30) Priorité: 03.01.2012 FR 1250038
(43) Date de publication de la demande: 12.11.2014
(73) Titulaire: L'Air Liquide Société Anonyme pour l'Etude et l'Exploitation des Procédés Georges Claude, 75007 Paris (FR)
(72) Inventeur: DOREE, Romain, F-94100 Saint Maur Des Fosses (FR); GERARDIN, Samuel, 31-024 Krakow (PL); TALBOT, Jean-Jacques, F-94430 Chennevieres-sur-marne (FR)
(74) Mandataire: Air Liquide
(86) Numéro de dépôt international: PCT/FR2012/052929
(87) Numéro de publication internationale: WO 2013/102715

(56) Documents cités:
- WO-A1-2010/132142
- FR-A1- 2 799 822
- JP-A- H10 170 145
- US-A1- 2006 213 222

## Description

La présente invention est relative à une installation de séparation par distillation à basse température et à un procédé de séparation dans une telle installation.

Une distillation à basse température s'effectue à une température en dessous de 0°C, voire en dessous de -100°C.

Elle concerne également une installation de séparation par distillation à basse température comprenant en plus d'une colonne de distillation, au moins un élément permettant une séparation de phases, qui n'est pas une colonne de distillation, par exemple une installation de séparation d'air ou d'un autre mélange de gaz. Un exemple d'un autre mélange peut être un gaz contenant au moins 20% d'hydrogène et/ou au moins 20% de monoxyde de carbone et/ou au moins 20% de méthane et/ou au moins 20% d'azote. Un autre exemple est un gaz contenant au moins 30% de dioxyde de carbone et au moins un autre gaz, par exemple au moins 5% d'oxygène, au moins 5% d'azote ou au moins 5% de monoxyde de carbone.

Dans ce document, les pourcentages concernant les puretés sont des puretés molaires.

La distillation à basse température s'effectue à une température subambiante et éventuellement à une température cryogénique. La distillation s'effectue dans au moins une colonne contenant des plateaux ou des garnissages.

Il est souvent nécessaire dans un procédé de séparation par distillation à basse température d'effectuer une séparation du fluide d'alimentation destiné à la colonne de distillation ou d'un fluide provenant de la colonne. Cette séparation peut s'effectuer en condensant partiellement le fluide et en envoyant le fluide produit dans une enceinte vide, appelée séparateur de phases, où le liquide se sépare du gaz, le gaz étant ensuite soutiré d'en haut du séparateur de phases et le liquide d'en bas de ce séparateur. Le gaz ou liquide peut être ensuite traité dans un autre séparateur de phases et/ou dans la colonne de distillation. Sinon, le gaz ou le liquide peut constituer un produit du procédé.

Ces séparateurs de phases sont classiquement assemblés dans la même enceinte isolée qu'une colonne de distillation, comme on voit dans FR-A-2799822 ou US2010/0139208 et les documents JP H10 170145 ou US 2006/0213222.

Si le séparateur de phases est volumineux, ceci complique la construction de la boîte froide, comme l'on voit dans FR-A-2799822 où il est nécessaire de prévoir une excroissance sur la boîte froide pour le séparateur de phases ou sinon de surdimensionner la boîte froide.

Dans les procédés de distillation cryogénique, dits « à condensation partielle », le débit à traiter, contenant au moins 20% d'hydrogène et au moins 20% de monoxyde de carbone est séparé dans au moins un séparateur de phases en amont d'une colonne de distillation.

Dans les procédés de séparation à basse température d'un gaz contenant au moins 30% de dioxyde de carbone et au moins un autre gaz, par exemple au moins 5% d'oxygène, au moins 5% d'azote ou au moins 5% de monoxyde de carbone, il est fréquent de séparer le gaz dans au moins un séparateur de phases avant de traiter le liquide issu d'au moins un séparateur dans une colonne de distillation.

JP-A-10170145 décrit un appareil de séparation d'air dans lequel un stockage d'azote dans une enceinte isolée sert à transférer du liquide vers une colonne de distillation pour la tenir en froid.

Il est également connu de traiter un fluide issu d'une colonne de distillation dans un séparateur de phases.

La présente invention permet de réduire la taille de la boîte froide contenant la colonne et d'assouplir la mise en place finale des éléments d'un appareil de séparation à basse température.

Selon un objet de l'invention, il est prévu une installation de séparation d'un gaz par distillation par basse température selon la revendication 1.

Selon d'autres objets facultatifs, il est prévu :
- que la première enveloppe contienne au moins deux enceintes superposées. Eventuellement :
   - la première enveloppe ne contient pas d'élément, à part la ou les enceintes, l'isolation et les moyens d'introduction de fluide dans la ou les enceintes.
- la première enveloppe ne contient pas de moyens de refroidissement ou de réchauffage d'un fluide destiné à ou provenant de la ou les enceintes.
- la première enveloppe ne contient pas de moyens de refroidissement ou de réchauffage d'un fluide destiné à ou provenant de la deuxième enveloppe.
- la troisième enveloppe ne contient pas de séparateur de phases.
- la deuxième enveloppe et/ou la troisième enveloppe contient également au moins un séparateur de phases.
- la première enveloppe contient tous les séparateurs de phases de l'installation.
- des moyens pour envoyer un fluide d'alimentation à séparer à au moins un séparateur de phases.
- au moins une enveloppe est isolée avec de la perlite.
- le ou les séparateurs de phases ainsi que leurs tuyaux associés occupent entre 60% et 70% du volume interne de la première enveloppe.
- deux séparateurs de phases sont superposés dans la première enveloppe, ayant le même diamètre.
- les deux séparateurs de phases sont solidaires.

Selon un autre objet de l'invention, il est prévu un procédé de séparation d'un gaz par distillation à basse température dans une installation telle que décrite ci-dessus dans lequel le gaz est de l'air ou contient au moins 20% d'hydrogène et au moins 20% de monoxyde de carbone ou contient au moins 30% de dioxyde de carbone et au moins un autre gaz, éventuellement au moins 5% d'oxygène, au moins 5% d'azote ou au moins 5% de monoxyde de carbone.

Le gaz peut contenir au moins 50% de dioxyde de carbone, voire au moins 70% de dioxyde de carbone.

Le fait que le ou les séparateurs de phases soient dans une enceinte dédiée permet de livrer les séparateurs de phases séparément des colonnes, plutôt que d'être obligé d'attendre la fin de fabrication des séparateurs de phases pour assembler la boîte froide des colonnes.

La première enveloppe peut contenir un séparateur de phases qui sépare un fluide à traiter dans la colonne de la deuxième enveloppe.

La première enveloppe contient un séparateur de phases qui sépare un fluide traité dans la colonne de la deuxième enveloppe.

Un séparateur de phase de la première enveloppe peut séparer un fluide à traiter dans la colonne de la deuxième enveloppe et un deuxième séparateur de phase de la première enveloppe peut séparer un fluide traité dans la colonne de la deuxième enveloppe de la première enveloppe.

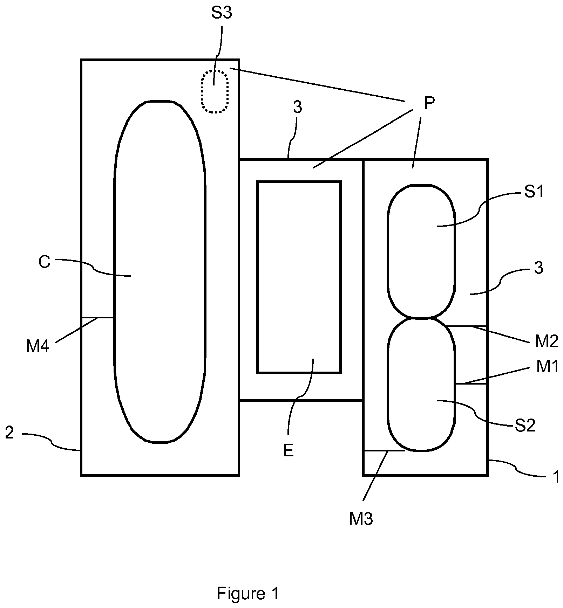

L'invention sera décrite de façon plus détaillée par rapport à la figure.

Un élément d'une installation de distillation à basse température comprend une première enveloppe 1 et une deuxième enveloppe 2. La première enveloppe 1 contient au moins un séparateur de phases S1, ici deux séparateurs de phases superposés S1, S2.

Chaque séparateur de phases est constitué par une enceinte ne contenant pas de garnissages ou de plateaux dans lequel un fluide diphasique peut être introduit, permettant de soutirer le liquide formé par la cuve de l'enceinte et le gaz formé par la tête de l'enceinte. La première enveloppe contient également des moyens M1 d'envoi de fluide diphasique vers l'enceinte, des moyens M3 pour soutirer le liquide en cuve et des moyens M2 pour soutirer le gaz en tête de l'enceinte, ces moyens étant constitués par des conduites permettant de rentrer ou de sortir le fluide concerné à travers les parois de l'enveloppe 1.

La première enveloppe peut également contenir des moyens de régulation du ou des séparateurs de phases, par exemple des vannes. L'instrumentation du ou des séparateurs de phase peut se trouver également dans cette enveloppe. L'enveloppe 1 est en tôle et en état de fonctionnement contient de la perlite P. Toutefois cette perlite P peut être rajoutée uniquement quand l'enveloppe est installée sur site.

Le ou les séparateurs de phases, en tant que séparateurs de phase, occupe(nt) entre 20% et 25 % du volume interne de l'enceinte. Le ou les séparateurs, chacun équipé d'une jupe et de tuyaux pour amener et exporter des fluides, occupe(nt) en tout entre 60% et 70% du volume interne de l'enveloppe, laissant entre 30% et 40% de volume à remplir par de la perlite P ou un autre isolant.

La deuxième enveloppe 2 contient au moins une colonne de distillation C, destiné à séparer un fluide provenant d'au moins une des enceintes S1, S2. La deuxième enveloppe 2 peut également contenir au moins un séparateur de phases S3, par exemple de petite taille, mais il est préférable que tout séparateur de phases se trouve dans la première enveloppe 1.

La deuxième enveloppe peut contenir des moyens M4 pour amener du fluide du séparateur de phases S1 ou S2 vers la colonne C ou pour amener un fluide de la colonne C vers le séparateur de phases S1, S2.

La colonne de distillation C fournit un fluide à séparer dans une des enceintes S1, S2.

Les première et deuxième enveloppes 1, 2 peuvent être reliées pour former un ensemble, par exemple à transporter sur site. Sinon chaque enveloppe peut être transportée séparément.

La troisième enveloppe 3 contient au moins un échangeur de chaleur E. L'échangeur de chaleur E est destiné à refroidir le débit à traiter dans la ou les colonnes C de la deuxième enveloppe 2 et éventuellement dans le ou les séparateurs de phases S1, S2 de la première enveloppe. Il peut également réchauffer au moins un produit d'une ou de la colonne, ce produit ayant éventuellement été séparé dans un séparateur de phases S1, S2 contenu dans la première enveloppe 1.

La troisième enveloppe 3 sera donc reliée à la première enveloppe 1 soit pour permettre l'envoi d'un débit refroidi dans l'échangeur E à séparer dans une colonne à un des séparateur de phases S1, S2 soit pour réchauffer dans l'échangeur E un fluide séparé dans un séparateur de phases S1, S2, dérivé d'un produit d'une colonne.

La troisième enveloppe 3 peut également contenir au moins un séparateur de phases, par exemple de petite taille, mais il est préférable que tout séparateur de phases se trouve dans la première enveloppe 1.

Les deuxième et troisième enveloppes 2, 3 peuvent également être isolées avec de la perlite P.

Pour un appareil de séparation, l'usage de l'invention a permis de réduire la longueur d'une deuxième enveloppe contenant des colonnes de 43 m à 33,5 m. Une telle réduction peut permettre de s'adapter à la grande majorité des infrastructures existantes.

L'usage d'un nombre d'enveloppes dédiées permet de maintenir la préfabrication en atelier et la minimisation des risques de chantier, tout en donnant la possibilité d'adresser des tailles d'unités très importantes.

## Revendications

1. Installation de séparation d'un gaz par distillation à basse température comprenant une première enveloppe (1) d'isolation thermique contenant au moins une enceinte (S1, S2), mais ne contenant aucune colonne de distillation, la première enveloppe contenant également des moyens (M1) pour introduire un fluide dans l'au moins une enceinte , des moyens (M3) pour soutirer un liquide de cuve de l'au moins une enceinte et des moyens (M2) pour soutirer un gaz de la tête de l'au moins une enceinte, l'au moins une enceinte étant adaptée à séparer des phases d'un fluide diphasique, une deuxième enveloppe d'isolation thermique (2) contenant au moins une colonne de distillation (C), aucune des première et deuxième enveloppes n'étant contenue dans l'autre ainsi que des moyens d'échange de chaleur (E) destinés à refroidir le débit à traiter dans la ou les colonnes (C) de la deuxième enveloppe (2), la première enveloppe (1) étant reliée aux moyens d'échange de chaleur pour permettre le transfert de fluide de l'enceinte (S1, S2) vers les moyens d'échange de chaleur ou des moyens d'échange de chaleur vers l'enceinte, **caractérisée en ce que** la deuxième enveloppe contient des moyens (M4) permettant de transférer au moins un fluide de la colonne vers la/ l'une des enceinte(s) et éventuellement de la /d'une des enceintes (s) vers la colonne et les moyens d'échange de chaleur sont contenus dans une troisième enveloppe d'isolation thermique (3) disposée entre la première et la deuxième enveloppes (1, 2).

2. Installation selon la revendication 1, dans laquelle la première enveloppe (1) contient au moins deux enceintes vides (S1, S2) superposées.

3. Installation selon l'une des revendications 1 ou 2, dans laquelle la deuxième enveloppe (2) et/ou la troisième enveloppe (3) contient également au moins un séparateur de phases (S3).

4. Installation selon l'une des revendications 1 ou 2, dans laquelle la première enveloppe de l'élément de séparation de phases contient tous les séparateurs de phases (S1, S2) de l'installation.

5. Installation selon l'une des revendications 1 à 4, comprenant des moyens (M1) pour envoyer un fluide d'alimentation à séparer à au moins un séparateur de phases (S1, S2).

6. Installation selon l'une des revendications 1 à 5
dans laquelle au moins une enveloppe (1, 2, 3) est isolée avec de la perlite (P).

7. Installation selon les revendications 1 à 6
dans laquelle deux séparateurs de phases (S1, S2) sont superposés dans la première enveloppe, ayant le même diamètre.

8. Installation selon la revendication 7
dans laquelle les deux séparateurs de phases (S1, S2) sont solidaires.

9. Procédé de séparation d'un gaz par distillation dans une colonne opérant à basse température dans une installation selon l'une des revendications 1 à 6 dans lequel le gaz
i) est de l'air, ou
ii) contient au moins 20% d'hydrogène et au moins 20% de monoxyde de carbone, ou
iii) contient au moins 30% de dioxyde de carbone et au moins un autre gaz, éventuellement au moins 5% d'oxygène, au moins 5% d'azote ou au moins 5% de monoxyde de carbone.

10. Procédé selon la revendication 9 dans lequel la première enveloppe contient un séparateur de phases (S1, S2) qui sépare un fluide à traiter dans la colonne de la deuxième enveloppe.

11. Procédé selon la revendication 9 ou 10 dans lequel la première enveloppe contient un séparateur de phases (S1, S2) qui sépare un fluide traité dans la colonne de la deuxième enveloppe.

12. Procédé selon les revendications 10 et 11 dans lequel un séparateur de phase (S1, S2) de la première enveloppe (1) sépare un fluide à traiter dans la colonne (C) de la deuxième enveloppe (2) et un deuxième séparateur de phase (S2, S1) de la première enveloppe sépare un fluide traité dans la colonne de la deuxième enveloppe.

## Patentansprüche

1. Anlage zur Abtrennung eines Gases durch Niedertemperaturdestillation, die einen ersten Mantel (1) zur Wärmeisolierung, welcher mindestens einen Hohlraum (S1, S2) beinhaltet, aber keinerlei Destillationskolonne beinhaltet, wobei der erste Mantel weiterhin Mittel (M1) zum Einleiten eines Fluids in den mindestens einen Hohlraum, Mittel (M3) zum Entnehmen einer Sumpfflüssigkeit aus dem mindestens einen Hohlraum und Mittel (M2) zum Entnehmen eines Gases aus dem Kopfraum des mindestens einen Hohlraums beinhaltet, wobei der mindestens eine Hohlraum dafür geeignet ist, Phasen eines zweiphasigen Fluids zu trennen, einen zweiter Mantel (2) zur Wärmeisolierung, welcher mindestens eine Destillationskolonne (C) beinhaltet, wobei keiner vom ersten und zweiten Mantel im jeweils anderen enthalten ist, sowie Wärmeaustauschmittel (E) umfasst, welche dazu bestimmt sind, den Stoffstrom abzukühlen, wie er in der oder in den Kolonnen (C) des zweiten Mantels (2) behandelt werden soll, wobei der erste Mantel (1) mit den Wärmeaustauschmitteln verbunden ist, um eine Übertragung des Fluids vom Hohlraum (S1, S2) zu den Wärmeaustauschmitteln oder von den Wärmeaustauschmitteln zum Hohlraum zu ermöglichen, **dadurch gekennzeichnet, dass** der zweite Mantel Mittel (M4) beinhaltet, die es ermöglichen, mindestens ein Fluid von der Kolonne zu dem/den Hohlraum/Hohlräumen und möglicherweise von dem/den Hohlraum/Hohlräumen zur Kolonne zu übertragen, und die Wärmeaustauschmittel in einem dritten Mantel (3) zur Wärmeisolierung enthalten sind, der zwischen dem ersten und dem zweiten Mantel (1, 2) angeordnet ist.

2. Anlage nach Anspruch 1, wobei der erste Mantel (1) mindestens zwei leere Hohlräume (S1, S2) enthält, die übereinander angeordnet sind.

3. Anlage nach einem der Ansprüche 1 oder 2, wobei der zweite Mantel (2) und/oder der dritte Mantel (3) weiterhin mindestens einen Phasentrenner (S3) beinhalten.

4. Anlage nach einem der Ansprüche 1 oder 2, wobei der erste Mantel des Elements zur Phasentrennung sämtliche Phasentrenner (S1, S2) der Anlage beinhaltet.

5. Anlage nach einem der Ansprüche 1 bis 4, die Mittel (M1) umfasst, um ein Speisefluid, das aufgetrennt werden soll, mindestens einem Phasentrenner (S1, S2) zuzuführen.

6. Anlage nach einem der Ansprüche 1 bis 5, wobei mindestens ein Mantel (1, 2, 3) mit Perlit (P) isoliert ist.

7. Anlage nach den Ansprüchen 1 bis 6, wobei im ersten Mantel zwei Phasentrenner (S1, S2) übereinander angeordnet sind, die den gleichen Durchmesser haben.

8. Anlage nach Anspruch 7, wobei die beiden Phasentrenner (S1, S2) fest miteinander verbunden sind.

9. Verfahren zur Abtrennung eines Gases durch Destillation in einer Kolonne, welche bei niedriger Temperatur betrieben wird, in einer Anlage gemäß einem der Ansprüche 1 bis 6, wobei das Gas
i) Luft ist, oder
ii) mindestens 20 % Wasserstoff und mindestens 20 % Kohlenmonoxid enthält, oder
iii) mindestens 30 % Kohlendioxid und mindestens ein weiteres Gas enthält, bei dem es sich möglicherweise um mindestens 5 % Sauerstoff, mindestens 5 % Stickstoff oder mindestens 5 % Kohlenmonoxid handelt.

10. Verfahren nach Anspruch 9, wobei der erste Mantel einen Phasentrenner (S1, S2) beinhaltet, der ein Fluid auftrennt, welches in der Kolonne des zweiten Mantels behandelt werden soll.

11. Verfahren nach Anspruch 9 oder 10, wobei der erste Mantel einen Phasentrenner (S1, S2) beinhaltet, der ein Fluid auftrennt, welches in der Kolonne des zweiten Mantels behandelt wurde.

12. Verfahren nach den Ansprüchen 10 und 11, wobei ein Phasentrenner (S1, S2) des ersten Mantels (1) ein Fluid auftrennt, das in der Kolonne (C) des zweiten Mantels (2) behandelt werden soll, und ein zweiter Phasentrenner (S2, S1) des ersten Mantels ein Fluid auftrennt, das in der Kolonne des zweiten Mantels behandelt wurde.

## Claims

1. Plant for separating a gas by low-temperature distillation comprising a first thermal insulation jacket (1) containing at least one chamber (S1, S2), but containing no distillation column, the first jacket also containing means (M1) for introducing a fluid into the at least one chamber, means (M3) for withdrawing a bottom liquid from the at least one chamber and means (M2) for withdrawing an overhead gas from the at least one chamber, the at least one chamber being suitable for separating phases of a two-phase fluid, a second thermal insulation jacket (2) containing at least one distillation column (C), neither of the first and second jackets being contained in the other and also heat exchange means (E) intended to cool the flow to be treated in the column(s) (C) of the second jacket (2), the first jacket (1) being connected to the heat exchange means in order to allow the transfer of fluid from the chamber (S1, S2) to the heat exchange means or from the heat exchange means to the chamber, **characterized in that** the second jacket contains means (M4) that make it possible to transfer at least one fluid from the column to the/one of the chamber (s) and optionally from the/one of the chamber(s) to the column and the heat exchange means are contained in a third thermal insulation jacket (3) positioned between the first and second jackets (1, 2).

2. Plant according to Claim 1, wherein the first jacket (1) contains at least two superposed empty chambers (S1, S2) .

3. Plant according to either of Claims 1 and 2, wherein the second jacket (2) and/or the third jacket (3) also contain at least one phase separator (S3).

4. Plant according to either of Claims 1 and 2, wherein the first jacket of the phase separation component contains all the phase separators (S1, S2) of the plant.

5. Plant according to one of Claims 1 to 4, comprising means (M1) for sending a feed fluid to be separated to at least one phase separator (S1, S2).

6. Plant according to one of Claims 1 to 5, wherein at least one jacket (1, 2, 3) is insulated with perlite (P).

7. Plant according to one of Claims 1 to 6, wherein two phase separators (S1, S2) are superposed in the first jacket, having the same diameter.

8. Plant according to Claim 7, wherein the two phase separators (S1, S2) are joined together.

9. Process for separating a gas by distillation in a column operating at low temperature in a plant according to one of Claims 1 to 6, wherein the gas
i) is air, or
ii) contains at least 20% hydrogen and at least 20% carbon monoxide, or
iii) contains at least 30% carbon dioxide and at least one other gas, optionally at least 5% oxygen, at least 5% nitrogen or at least 5% carbon monoxide.

10. Process according to Claim 9, wherein the first jacket contains a phase separator (S1, S2) which separates a fluid to be treated in the column of the second jacket.

11. Process according to Claim 9 or 10, wherein the first jacket contains a phase separator (S1, S2) which separates a fluid treated in the column of the second jacket.

12. Process according to Claims 10 and 11, wherein a phase separator (S1, S2) of the first jacket (1) separates a fluid to be treated in the column (C) of the second jacket (2) and a second phase separator (S2, S1) of the first jacket separates a fluid treated in the column of the second jacket.
